# EUROPEAN PATENT APPLICATION

(11) **EP 4 553 092 A1**
(43) Date of publication of application: **14.05.2025**
(21) Application number: 23835634.9
(22) Date of filing: 15.02.2023
(51) Int. Cl.: C08F 136/06, C08F 4/70, C08F 4/52

(54) **POLYMER COMPOSITION PREPARATION METHOD AND POLYMER COMPOSITION**

(30) Priority: 04.07.2022 KR 20220081775
(71) Applicant: LG Chem, Ltd., Yeongdeungpo-gu Seoul 07336 (KR)
(72) Inventor: KANG, Suk Youn, Daejeon 34122 (KR); LEE, Tae Chul, Daejeon 34122 (KR); KIM, Dong Hui, Daejeon 34122 (KR); CHOI, Seo Won, Daejeon 34122 (KR)
(74) Representative: Goddar, Heinz J.
(86) International application number: PCT/KR2023/002203
(87) International publication number: WO 2024/010164

(57) **Abstract**

The present invention relates to a method for preparing a polymer composition, the method for preparing a polymer composition capable of preventing a yellowing phenomenon of a branched conjugated diene-based polymer with improved branching, and a polymer composition prepared thereby.

## Description

### TECHNICAL FIELD

### Cross-reference to Related Applications

This application claims the benefit of Korean Patent Application No. 10-2022-0081775, filed on July 4, 2022, in the Korean Intellectual Property Office, the disclosure of which is incorporated herein in its entirety by reference.

### Technical Field

The present invention relates to a polymer composition preparation method and a polymer composition prepared thereby.

### BACKGROUND ART

Recently, with the increasing interest in energy saving and environmental issues, there is a demand for low fuel consumption of automobiles. As one of the methods for achieving the low fuel consumption, a method for increasing the cis bond content of polybutadiene in a rubber composition for forming tire has been proposed.

Polybutadiene may be prepared using a Ziegler-Natta-based catalyst. The Ziegler-Natta-based catalyst may be prepared by activating an organometallic compound, such as an organonickel compound, with an alkyl aluminum compound and a fluorine compound, and the prepared catalyst is reacted with a 1,3-butadiene monomer to prepare polybutadiene.

U.S. Patent No. 7081504 (Patent Document 1) and U.S. Patent No. 5451646 (Patent Document 2) disclose a method for preparing polybutadiene with a high cis bond content, wherein in order to improve processability, when preparing the polybutadiene, an alkylated diphenylamine compound and a para-styrenated diphenylamine compound are introduced to control the molecular weight of the polybutadiene and improve branching.

However, as shown in Patent Documents 1 and 2, an alkylated diphenylamine compound and a para-styrenated diphenylamine compound introduced when preparing polybutadiene remain in the polybutadiene, and amine-based compounds such as the alkylated diphenylamine compound and para-styrenate diphenylamine compound remaining in the polybutadiene may cause yellowing of a rubber composition.

### [Prior Art Document]

### [Patent Document]

(Patent Document 1) US 7081504 B2
(Patent Document 2) US 5451646 A

### DISCLOSURE OF THE INVENTION

### TECHNICAL PROBLEM

An object of the present invention is to prevent a yellowing phenomenon of a branched conjugated diene-based polymer with improved branching.

That is, in order to solve the problems mentioned in the background art of the present invention, the present invention provides a method for preparing a polymer composition capable of preventing a yellowing phenomenon of a conjugated diene-based polymer prepared from a catalyst composition containing a diphenylamine compound by mixing a compound containing a t-butylphenol group with a branched conjugated diene-based polymer.

In addition, another object of the present invention is to provide a polymer composition prepared by the above polymer composition preparation method, thereby having excellent processability by including a branched conjugated diene-based polymer, and preventing a yellowing phenomenon.

### TECHNICAL SOLUTION

To this end, the present invention provides a method for preparing a polymer composition and a polymer composition.
(1) The present invention provides a method for preparing a polymer composition, the method including preparing a branched conjugated diene-based polymer by polymerizing a conjugated diene-based monomer in the presence of a catalyst composition containing an organometallic compound, an organoaluminum compound, a fluorine-based compound, and a diphenylamine-based compound S10, and mixing the monomer before the polymerization of Step S10, a polymerization solution during the polymerization, or the branched conjugated diene-based polymer after the polymerization with a compound containing a t-butylphenol group S20.
(2) In (1) above, the present invention provides a method for preparing a polymer composition, wherein the organometallic compound is an organonickel compound.
(3) In (1) or (2) above, the present invention provides a method for preparing a polymer composition, wherein the organometallic compound is one or more selected from the group consisting of nickel benzoate, nickel acetate, nickel naphthenate, nickel octanoate, nickel neodecanoate, bis(α-furyl dioxime) nickel, nickel palmitate, nickel stearate, nickel acetylacetonate , nickel salicaldade, bis(cyclopentadiene) nickel, bis(salicylaldehyde) ethylene diimine nickel, cyclopentadienyl-nickel nitrosyl, bis(π-allyl nickel), bis(π-cycloocta-1,5-diene) nickel, bis(π-allyl nickel trifluoroacetate) and nickel tetracarbonyl.
(4) In any one of (1) to (3) above, the present invention provides a method for preparing a polymer composition, wherein the organoaluminum compound is an alkyl aluminum compound represented by Formula 1 below.

   [Formula 1] AlR¹R²R³

   In Formula 1 above, R¹ to R³ are each independently hydrogen or an alkyl group having 1 to 12 carbon atoms, wherein R¹ to R³ are not all hydrogen.
(5) In any one of (1) to (4) above, the present invention provides a method for preparing a polymer composition, wherein the fluorine-based compound is one or more selected from the group consisting of hydrogen fluoride and boron trifluoride.
(6) In any one of (1) to (5) above, the present invention provides a method for preparing a polymer composition, wherein the diphenylamine-based compound is a compound represented by Formula 2 below. 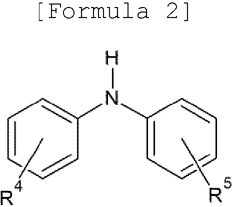 In Formula 2 above, R⁴ and R⁵ are each independently an alkyl group having 2 to 18 carbon atoms substituted or unsubstituted with an aryl group having 6 to 30 carbon atoms.
(7) In any one of (1) to (6) above, the present invention provides a method for preparing a polymer composition, wherein the compound containing a t-butylphenol group is t-butylcatechol, butylated hydroxytoluene, or a mixture thereof.
(8) In any one of (1) to (7) above, the present invention provides a method for preparing a polymer composition, wherein in Step S20, the compound containing a t-butylphenol group is mixed in a content of 0.0001 parts by weight to 0.005 parts by weight based on 100 parts by weight of the conjugated diene-based monomer or the branched conjugated diene-based polymer.
(9) The present invention provides a polymer composition including a metal-catalyzed branched conjugated diene-based polymer and a compound containing a t-butylphenol group.
(10) In (9) above, the present invention provides a polymer composition, wherein the content of the compound containing a t-butylphenol group is 0.0001 parts by weight to 0.005 parts by weight based on 100 parts by weight of the metal-catalyzed branched conjugated diene-based polymer.

### ADVANTAGEOUS EFFECTS

A polymer composition prepared according to a polymer composition preparation method of the present invention contains a branched conjugated diene-based polymer, thereby having excellent processability, and preventing a yellowing phenomenon.

### MODE FOR CARRYING OUT THE INVENTION

Hereinafter, the present invention will be described in more detail to facilitate understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The present invention relates to a polymer composition preparation method and a polymer composition prepared thereby, and includes the entire contents described in U.S. Patent No. 7081504 (Patent Document 1) and U.S. Patent No. 5451646 (Patent Document 2) with respect to a branched conjugated diene-based polymer. Therefore, even if there are matters not described in the description of the present invention regarding the preparation of a branched conjugated diene-based polymer, the matters described in U.S. Patent No. 7081504 (Patent Document 1) and U.S. Patent No. 5451646 (Patent Document 2) all correspond to the branched conjugated diene-based polymer of the present invention, and the matters described in U.S. Patent No. 7081504 (Patent Document 1) and U.S. Patent No. 5451646 (Patent Document 2) may be applied to the preparation of the branched conjugated diene-based polymer of the present invention.

Hereinafter, in addition to the contents disclosed in U.S. Patent No. 7081504 (Patent Document 1) and U.S. Patent No. 5451646 (Patent Document 2), the technical features of the present invention for solving the problems of U.S. Patent No. 7081504 (Patent Document 1) and U.S. Patent No. 5451646 (Patent Document 2) will be described in detail below.

### Method for preparing polymer composition

The present invention provides a method for preparing a polymer composition.

According to an embodiment of the present invention, the method for preparing a polymer composition may include preparing a branched conjugated diene-based polymer by polymerizing a conjugated diene-based monomer in the presence of a catalyst composition containing an organometallic compound, an organoaluminum compound, a fluorine-based compound, and a diphenylamine-based compound S10, and mixing the monomer before the polymerization of Step S10, a polymerization solution during the polymerization, or the branched conjugated diene-based polymer after the polymerization with a compound containing a t-butylphenol group S20.

According to an embodiment of the present invention, Step S10 is a step for preparing a branched conjugated diene-based polymer, and may be performed by polymerizing a conjugated diene-based monomer in the presence of a catalyst composition.

According to an embodiment of the present invention, the catalyst composition may include an organometallic compound activated with an organoaluminum compound and a fluorine-based compound for polymerizing a conjugated diene-based monomer, and a diphenylamine-based compound for inducing branching of a conjugated diene-based polymer. Here, the branching of a conjugated diene-based polymer refers to inducing the formation of a side chain with a branch in a main chain formed from a conjugated diene-based monomer, and the branched conjugated diene-based polymer is to be distinguished from a linear conjugated diene-based polymer, and refers to a conjugated diene-based polymer including a side chain.

According to an embodiment of the present invention, the organometallic composing may be an organonickel compound. As a specific example, the organometallic compound may be one or more selected from the group consisting of nickel benzoate, nickel acetate, nickel naphthenate, nickel octanoate, nickel neodecanoate, bis(α-furyl dioxime) nickel, nickel palmitate, nickel stearate, nickel acetylacetonate , nickel salicaldade, bis(cyclopentadiene) nickel, bis(salicylaldehyde) ethylene diimine nickel, cyclopentadienyl-nickel nitrosyl, bis(π-allyl nickel), bis(π-cycloocta-1,5-diene) nickel, bis(π-allyl nickel trifluoroacetate) and nickel tetracarbonyl, and as a more specific example, may be a nickel octanoate.

According to an embodiment of the present invention, the organic aluminum compound is for activating the organometallic compound, and may be an alkyl aluminum compound represented by Formula 1 below.

[Formula 1] AlR¹R²R³

In Formula 1 above, R¹ to R³ are each independently hydrogen or an alkyl group having 1 to 12 carbon atoms, wherein R¹ to R³ are not all hydrogen.

According to an embodiment of the present invention, the organic aluminum compound may be an alkyl aluminum such as trimethyl aluminum, triethyl aluminum, tri-n-propyl aluminum, triisopropyl aluminum, tri-n-butyl aluminum, triisobutyl aluminum, tri-t-butyl aluminum, tripentyl aluminum, trihexyl aluminum, tricyclohexyl aluminum, trioctyl aluminum, or the like; dihydrocarbyl aluminum hydride such as diethyl aluminum hydride, di-n-propyl aluminum hydride, diisopropyl aluminum hydride, di-n-butyl aluminum hydride, diisobutyl aluminum hydride (DIBAH), di-n-octyl aluminum hydride, diphenyl aluminum hydride, di-p-tolyl aluminum hydride, dibenzyl aluminum hydride, phenylethyl aluminum hydride, phenyl-n-propyl aluminum hydride, phenylisopropyl aluminum hydride, phenyl-n-butyl aluminum hydride, phenylisobutyl aluminum hydride, phenyl-n-octyl aluminum hydride, p-tolylethyl aluminum hydride, p-tolyl-n-propyl aluminum hydride, p-tolylisopropyl aluminum hydride, p-tolyl-n-butyl aluminum hydride, p-tolylisobutyl aluminum hydride, p-tolyl-n-octyl aluminum hydride, benzylethyl aluminum hydride, benzyl-n-propyl aluminum hydride, benzylisopropyl aluminum hydride, benzyl-n-butyl aluminum hydride, benzylisobutyl aluminum hydride, benzyl-n-octyl aluminum hydride, or the like, hydrocarbyl aluminum dianhydride such as ethyl aluminum dihydride, n-propyl aluminum dihydride, isopropyl aluminum dihydride, n-butyl aluminum dihydride, isobutyl aluminum dihydride, n-octyl aluminum dihydride, or the like.

According to an embodiment of the present invention, the fluorine-based compound is for activating an organometallic compound, and may be one or more selected from the group consisting of hydrogen fluoride and boron trifluoride. The fluorine-based compound may be in the form of a complex if necessary, and the complex may be formed from an ether-based compound, an alcohol-based compound, a ketone-based compound, an ester-based compound, a nitrile-based compound, an amine-based compound, water, or the like which includes atoms or radicals capable of providing electrons to or sharing electrons with hydrogen fluoride or boron trifluoride.

According to an embodiment of the present invention, in the catalyst composition, the molar ratio of the organometallic compound:the organic aluminum compound may be 1:0.3 to 300, the molar ratio of the organometallic compound:the fluorine-based compound may be 1:0.5 to 200, and the molar ratio of the organic aluminum compound: the fluorine-based compound may be 1:0.7 to 7.

According to an embodiment of the present invention, the diphenylamine-based compound may be a compound represented by Formula 2 below.

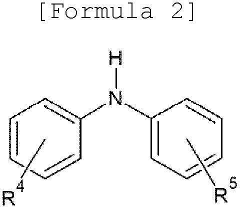

In Formula 2 above, R⁴ and R⁵ are each independently an alkyl group having 2 to 18 carbon atoms substituted or unsubstituted with an aryl group having 6 to 30 carbon atoms.

According to an embodiment of the present invention, the R⁴ and R⁵ may each be independently present at an ortho position, a meta portion, or a para position, and may be an alkyl group having 2 or more, 3 or more, or 4 or more carbon atoms substituted or unsubstituted with an aryl group having 6 to 30 carbon atoms, or an alkyl group having 18 or less, 16 or less, 14 or less, or 12 or less carbon atoms substituted or unsubstituted with an aryl group having 6 to 30 carbon atoms. As a specific example, the R⁴ and R⁵ may each be independently present at the para position. In addition, when the alkyl group is substituted with an aryl group having 6 to 30 carbon atoms, the alkyl group may be an alkyl group having 2 carbon atoms, and as a more specific example, the alkyl group having 2 carbon atoms substituted with an aryl group having 6 to 30 carbon atoms may be a styrene derivative. That is, the diphenylamine-based compound may be a diphenylamine compound alkylated with an alkyl group having 2 to 18 carbon atoms or a para-styrenate diphenylamine compound.

According to an embodiment of the present invention, the content of the diphenylamine-based compound may be 0.25 parts by weight to 1.5 parts by weight, or 0.5 parts by weight to 0.75 parts by weight based on 100 parts by weight of a conjugated diene-based monomer.

According to an embodiment of the present invention, Step S10 may be performed by polymerizing a conjugated diene-based monomer in a hydrocarbon solvent in the presence of the catalyst composition.

According to an embodiment of the present invention, the hydrocarbon solvent may be one or more selected from the group consisting of n-pentane, n-hexane, n-heptane, isooctane, cyclohexane, toluene, benzene, and xylene.

According to an embodiment of the present invention, the conjugated diene-based monomer may be one or more selected from the group consisting of 1,3-butadiene, isoprene, 1,3-pentadiene, 1,3-hexadiene, 2,3-dimethyl-1,3-butadiene, 2-ethyl-1,3-butadiene, 2-methyl-1,3-pentadiene, 3-methyl-1,3-pentadiene, 4-methyl-1,3-pentadiene, and 2,4-hexadiene, and as a specific example, may be 1,3-butadiene.

According to an embodiment of the present invention, the polymerization of Step S10 may be performed using coordination anionic polymerization, and the polymerization environment may be bulk polymerization, solution polymerization, suspension polymerization, or emulsion polymerization, and as a specific example, may be solution polymerization.

According to an embodiment of the present invention, the polymerization of Step S10 may be performed at a temperature of -20 °C or higher, -10 °C or higher, 0 °C or higher, 10 °C or higher, 20 °C or higher, 30 °C or higher, 40 °C or higher, 50 °C or higher, or 60 °C or higher, and in addition, may be performed at a temperature of 200 °C or lower, 150 °C or lower, 120 °C or lower, or 90 °C or lower, and within the above ranges, a cis-1,4 bond content of the prepared conjugated diene-based polymer may be secured while smoothly controlling the polymerization reaction.

According to an embodiment of the present invention, the polymerization of Step S10 may be performed for 15 minutes or more, 20 minutes or more, 30 minutes or more, 40 minutes or more, 50 minutes or more, or 1 hour or more, and in addition, may be performed for 3 hours or less, 2 hours 30 minutes or less, or 2 hours or less.

According to an embodiment of the present invention, the conjugated diene-based polymer formed by the polymerization of Step S10 may be an active polymer including a site activated by the catalyst composition.

According to an embodiment of the present invention, the polymer composition manufacturing method may include reacting the active polymer with a denaturant S11. The denaturant may be a known denaturant which is usable in the preparation of a conjugated diene-based polymer using a catalyst composition containing an organometallic compound.

According to an embodiment of the present invention, Step S20 may performed by mixing a compound containing a t-butylphenol group with the monomer before the polymerization of Step S10, a polymerization solution during the polymerization, or the branched conjugated diene-based polymer after the polymerization. At this time, a method for mixing the compound containing a t-butylphenol group is not particularly limited, and the compound containing a t-butylphenol group may be added after being pre-mixed with the monomer or a solvent in Step S10, may be added during the polymerization in Step S10, may be mixed by being directly added to a solution phase of the branched conjugated diene-based polymer prepared in Step S10, may be mixed when the solvent is removed in Step S10, may be mixed after obtaining the branched conjugated diene-based polymer prepared in Step S10 in a rubber phase, or may be mixed by being added during rubber blending after obtaining the branched conjugated diene-based polymer prepared in Step S10 in a rubber phase. That is, Step S20 does not necessarily need to be performed after Step S10, and may be performed at the same time as Step S10, or at an appropriate point in time, if necessary, after Step S10.

According to an embodiment of the present invention, as the compound containing a t-butylphenol group, any compound having a t-butyl group as a substituent in a phenol group is applicable, and at this time, the t-butyl group may be present at an ortho position, a meta portion, or a para position. In addition, the compound containing a t-butylphenol group may further include (up to four) another substituent in addition to the t-butyl group in a phenol group, and at this time, the another substituent may be an alkyl group having 1 to 30, 1 to 20, or 1 to 10 carbon atoms. As a specific example, the compound containing a t-butylphenol group may be t-butylcatechol, butyrated hydroxytoluene, or a mixture thereof.

According to an embodiment of the present invention, in Step S20, the compound containing a t-butylphenol group may be mixed in a content of 0.0001 parts by weight to 0.005 parts by weight based on 100 parts by weight of the conjugated diene-based monomer or the branched conjugated diene-based polymer. As a specific example, in Step S20, the compound containing a t-butylphenol group may be mixed in a content of 0.0001 parts by weight or greater, 0.0005 parts by weight or greater, 0.001 parts by weight or greater, 0.0015 parts by weight or greater, 0.002 parts by weight or greater, 0.0025 parts by weight or greater, 0.003 parts by weight or greater, 0.0035 parts by weight or greater, or 0.004 parts by weight or greater, and in addition, 0.005 parts by weight or less, or 0.004 parts by weight or less, and within these ranges, there is an effect of significantly preventing a yellowing phenomenon without degrading the physical properties of a polymer composition.

### Polymer composition

The present invention provides a polymer composition.

According to an embodiment of the present invention, the polymer composition may include a metal-catalyzed branched conjugated diene-based polymer and a t-butylphenol group.

According to an embodiment of the present invention, the polymer composition may include a metal-catalyzed branched conjugated diene-based polymer. As a specific example, the metal-catalyzed branched conjugated diene-based polymer is the branched conjugated diene-based polymer prepared in Step S10 of the polymer composition preparation method, and may be a metal-catalyzed branched conjugated diene-based polymer.

According to an embodiment of the present invention, the metal-catalyzed branched conjugated diene-based polymer may include a conjugated diene-based monomer unit. The conjugated diene-based monomer unit refers to a repeating unit formed by polymerization of a conjugated diene monomer.

According to an embodiment of the present invention, the metal-catalyzed branched conjugated diene-based polymer may include 80 wt% or greater, 85 wt% or greater, 90 wt% or greater, 95 wt% or greater, or 100 wt% of a 1,3-butadiene monomer unit, and may selectively include 20 wt% or less, 15 wt% or less, 10 wt% or less, or 5 wt% or less of another conjugated diene-based monomer unit copolymerizable with a 1,3-butadiene monomer, and within these ranges, a decrease in cis-1,4 bond content in the conjugated diene-based polymer may be prevented. The 1,3-butadiene monomer may be 1,3-butadiene, or a derivative thereof such as 2,3-dimethyl-1,3-butadiene or 2-ethyl-1,3-butadiene, and another conjugated diene-based monomer copolymerizable with the 1,3-butadiene may be 2-methyl-1,3-pentadiene, 1,3-pentadiene, 3-methyl-1,3-pentadiene, 4-methyl-1,3-pentadiene, 1,3-hexadiene, or 2,4-hexadiene.

According to an embodiment of the present invention, the metal-catalyzed branched conjugated diene-based polymer may be a conjugated diene-based polymer catalyzed from a catalyst composition containing an organometallic compound. That is, the conjugated diene-based polymer may be a conjugated diene-based polymer including an organometallic site activated from the catalyst composition containing an organonickel compound.

According to an embodiment of the present issue, the metal-catalyzed branched conjugated diene-based polymer may have a weight average molecular weight (Mw) of 1.0 X 10⁵ g/mol or greater, 2.0 X 10⁵ g/mol or greater, 3.0 X 10⁵ g/mol or greater, 4.0 X 10⁵ g/mol or greater, 5.0 X 10⁵ g/mol or greater, 6.0 X 10⁵ g/mol or greater, 7.0 X 10⁵ g/mol or greater, 8.0 X 10⁵ g/mol or greater, or 9.0 X 10⁵ g/mol or greater, and in addition, 1.0 X 10⁶ g/mol or less, 9.0 X 10⁵ g/mol or less, 8.0 X 10⁵ g/mol or less, 7.0 X 10⁵ g/mol or less, 6.0 X 10⁵ g/mol or less, 5.0 X 10⁵ g/mol or less, 4.0 X 10⁵ g/mol or less, or 3.0 X 10⁵ g/mol or less. In addition, the conjugated diene-based polymer may have a number average molecular weight (Mn) of 1.0 X 10⁵ g/mol or greater, 2.0 X 10⁵ g/mol or greater, 3.0 X 10⁵ g/mol or greater, 4.0 X 10⁵ g/mol or greater, or 5.0 X 10⁵ g/mol or greater, and in addition, 6.0 X 10⁵ g/mol or less, 5.0 X 10⁵ g/mol or less, 4.0 X 10⁵ g/mol or less, 3.0 X 10⁵ g/mol or less, 2.0X 10⁵ g/mol or less, or 1.0 X 10⁵ g/mol or less. Within these ranges, tensile properties are excellent when applied to a polymer composition, and processability is excellent, thereby improving workability of the polymer composition, resulting in facilitating kneading, so that there is an effect in that the balance between mechanical properties and physical properties of the polymer composition is excellent.

According to an embodiment of the present invention, the metal-catalyzed branched conjugated diene-based polymer may have a molecular weight distribution (Mw/Mn) of 1.0 or greater, 1.5 or greater, 2.0 or greater, 2.1 or greater, 2.2 or greater, or 2.3 or greater, and in addition, 4.0 or less, 3.5 or less, 3.0 or less, or 2.5 or less. The molecular weight distribution may be calculated from the ratio (Mw/Mn) of the weight average molecular weight (Mw) to the number average molecular weight (Mn). At this time, the number average molecular weight (Mn) is a common average of individual polymer molecular weights calculated by measuring the molecular weight of n polymer chains, obtaining the sum of the molecular weights, and dividing the sum by n, and the weight average molecular weight (Mw) represents the molecular weight distribution of the polymer composition. All molecular weight averages may be expressed in grams per mole (g/mol). In addition, the weight average molecular weight and the number average molecular weight may each refer to a polystyrene conversion molecular weight analyzed by gel permeation chromatography (GPC).

According to an embodiment of the present invention, when the metal-catalyzed branched conjugated diene-based polymer simultaneously meets the weight average molecular weight (Mw) and the number average molecular weight conditions together with the molecular weight distribution, tensile properties, viscoelasticity, and processability with respect to a polymer composition are excellent when applied to the polymer composition, and there is an effect in that the physical properties balance therebetween is excellent.

According to an embodiment of the present invention, the metal-catalyzed branched conjugated diene-based polymer may have a cis-1,4 bond content of 95.0 wt% or greater, 95.5 wt% or greater, 96.0 wt% or greater, 96.5 wt% or greater, 97.0 wt% or greater, or 97.5 wt% or greater, and in addition, 100.0 wt% or less, 99.5 wt% or less, or 99.0 wt% or less.

According to an embodiment of the present invention, the metal-catalyzed branched conjugated diene-based polymer may have a Mooney viscosity (ML1+4, @100 °C) of 30 or greater, 35 or greater, 40 or greater, or 45 or greater, and in addition, 70 or less, 65 or less, 60 or less, 55 or less, or 50 or less.

According to an embodiment of the present invention, the polymer composition may include the metal-catalyzed branched conjugated diene-based polymer in an amount of 0.1 wt% or greater, 10 wt% or greater, or 20 wt% or greater, and in addition, in an amount of 100 wt% or less, 95 wt% or less, or 90 wt% or less, and within these ranges, the abrasion resistance, crack resistance, and the like of a molded article, for example, a tire, manufactured using the polymer composition may be sufficiently secured.

According to an embodiment of the present invention, the compound containing a t-butylphenol group may be the same as that described above in the polymer composition preparation method, and the compound containing a t-butylphenol group may be present in the form of a derivative derived from a compound containing a t-butylphenol group in the polymer composition.

According to an embodiment of the present invention, the content of the compound containing a t-butylphenol group may be, based on 100 parts by weight of the metal-catalyzed branched conjugated diene-based polymer, 0.0001 parts by weight or greater, 0.0005 parts by weight or greater, 0.001 parts by weight or greater, 0.0015 parts by weight or greater, 0.002 parts by weight or greater, 0.0025 parts by weight or greater, 0.003 parts by weight or greater, 0.0035 parts by weight or greater, or 0.004 parts by weight or greater, and in addition, 0.005 parts by weight or less, or 0.004 parts by weight or less, and within these ranges, there is an effect of significantly preventing a yellowing phenomenon without degrading the physical properties of the polymer composition.

### Rubber composition

The present invention provides a rubber composition.

According to an embodiment of the present invention, the rubber composition may include the polymer composition.

According to an embodiment of the present invention, the rubber composition may further include another rubber component, if necessary, in addition to the polymer composition. At this time, the rubber component may be included in a content of 90 wt% or less based on the total weight of the rubber composition. Specifically, 1 to 900 parts by weight of the rubber component may be included based on 100 parts by weight of the polymer composition.

According to an embodiment of the present invention, the rubber component may be a natural rubber or a synthetic rubber, and for example, the rubber component may be a natural rubber (NR) including cis-1,4-polyisoprene, a modified natural rubber such as an epoxidized natural rubber (ENR), a deproteinized natural rubber (DPNR), or a hydrogenated natural rubber obtained by modifying or refining the typical natural rubber, or a synthetic rubber such as a styrene-butadiene copolymer (SBR), polybutadiene (BR), polyisoprene (IR), a butyl rubber (IIR), an ethylene-propylene copolymer, polyisobutylene-co-isoprene, neoprene, poly(ethylene-co-propylene), poly(styrene-co-butadiene), poly(styrene-co-isoprene), poly(styrene-co-isoprene-co-butadiene), poly(isoprene-co-butadiene), poly(ethylene-co-propylene-co-diene), a polysulfide rubber, an acrylic rubber, a urethane rubber, a silicone rubber, an epichlorohydrin rubber, a halogenated butyl rubber, or the like, and any one thereof or a mixture of two or more thereof may be used.

According to an embodiment of the present invention, the rubber composition may include a filler in an amount of 20 parts by weight to 90 parts by weight based on 100 parts by weight of the polymer composition. The filler may be a silica-based filler, a carbon black-based filler, or a combination thereof. As a specific example, the filler may be a carbon black-based filler.

According to an embodiment of the present invention, the carbon black-based filler may have a nitrogen adsorption specific surface area (measured in accordance with N2SA, JIS K 6217-2:2001) of 20 m²/g to 250 m²/g, and within this range, processability of the rubber composition may be excellent and reinforcement performance by the filler may be sufficiently secured. In addition, the carbon black-based filler may have a dibutylphthalate (DBP) absorption of 80 cc/100 g to 200 cc/100 g, and within this range, the processability of the rubber composition may be excellent and the reinforcement performance by the filler may be sufficiently secured.

According to an embodiment of the present invention, the silica-based filler may be wet silica (hydrous silicate), dry silica (anhydrous silicate), calcium silicate, aluminum silicate, colloidal silica, or the like. As a specific example, the silica-based filler may be wet silica having the most remarkable effect of improving both fracture properties and wet grip properties. In addition, the silica-based filler may have a nitrogen surface area per gram (N2SA) of 120 m²/g to 180 m²/g, and may have a cetyl trimethyl ammonium bromide (CTAB) adsorption specific surface area of 100 m²/g to 200 m²/g, and within these ranges, the processability of the rubber composition may be excellent and the reinforcement performance by the filler may be sufficiently secured.

According to an embodiment of the present invention, when a silica-based filler is used as the filler, a silane coupling agent may be used together to improve reinforcement properties and low exothermic properties. The silane coupling agent may be bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzolyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide, or the like. As a specific example, in consideration of the effect of improving reinforcement properties, the silane coupling agent may be bis(3-triethoxysilylpropyl)polysulfide or 3-trimethoxysilylpropylbenzothiazyltetrasulfide.

According to an embodiment of the present invention, the rubber composition may be sulfur cross-linkable, and accordingly, may further include a vulcanization agent. Specifically, the vulcanization agent may be sulfur powder, and may be included in an amount of 0.1 parts by weight to 10 parts by weight based on 100 parts by weight of the rubber component, and within this range, an elastic modulus and strength required of a vulcanized rubber composition are secured, and at the same time, low fuel consumption properties may be secured.

According to an embodiment of the present invention, the rubber composition may further include, in addition to the above components, various additives commonly used in the rubber industry, specifically, a vulcanization accelerator, a process oil, a plasticizer, an anti-aging agent, an anti-scorch agent, a zinc white, a stearic acid, a thermosetting resin, a thermoplastic resin, or the like.

According to an embodiment of the present invention, the vulcanization accelerator is not particularly limited, and specifically, a thiazole-based compound such as 2-mercaptobenzothiazole (M), dibenzothiazyldisulfide (DM), N-cyclohexyl-2-benzothiazylsulfenamide (CZ), or the like, or a guanidine-based compound such as diphenylguanidine (DPG), or the like may be used. The vulcanization accelerator may be included in an amount of 0.1 parts by weight to 5 parts by weight based on 100 parts by weight of the rubber component.

According to an embodiment of the present invention, the process oil acts as a softening agent in the rubber composition, and a specific example thereof may include a paraffinic, naphthenic, or aromatic compound, and as a more specific example thereof, when considering tensile strength and abrasion resistance, an aromatic process oil may be used, and when considering hysteresis losses, and low-temperature properties, a naphthenic or paraffinic process oil may be used. The process oil may be included in an amount of 100 parts by weight or less based on 100 parts by weight of the rubber component, and within this range, it is possible to prevent degradation in tensile strength and low exothermic properties (low fuel consumption properties) of a vulcanized rubber.

According to an embodiment of the present invention, the anti-aging agent may be N-isopropyl-N'-phenyl-p-phenylenediamine, N-(1,3-dimethylbutyl)-N'-phenyl-p-phenylenediamine, 6-ethoxy-2,2,4-trimethyl-1,2-dihydroquinoline, a high-temperature condensate of diphenylamine and acetone, or the like. The anti-aging agent may be used in an amount of 0.1 parts by weight to 6 parts by weight based on 100 parts by weight of the rubber component.

According to an embodiment of the present invention, the rubber composition may be obtained by kneading using a kneader such as a banbury mixer, a roll, and an internal mixer according to the above blending formulation, and in addition, a rubber composition which is low exothermic and has excellent abrasion resistance may be obtained by a vulcanization process after molding processing.

According to an embodiment of the present invention, the rubber composition may be useful in manufacturing each member of a tire such as a tire tread, an under tread, a side wall, a carcass coated rubber, a belt coated rubber, a bead filler, a wiper, and a bead coated rubber, and various industrial rubber products such as a dust-proof rubber, a belt conveyor, and a hose. As a specific example, a molded article manufactured using the rubber composition may include a tire or a tire tread.

Hereinafter, embodiments of the present invention will be described in detail so that those skilled in the art may easily carry out the present invention. However, the present invention may be embodied in many different forms, and is not limited to the embodiments set forth herein.

### Preparation Examples

### Preparation Example 1: Preparation of catalyst composition

A catalyst composition was prepared by the same method as in Examples 10 to 22 described in U.S. Patent No. 7081504 (Patent Document 1).

### Examples

### Example 1

500 g of 1,3-butadiene and 4.2 kg of n-hexane were added to a 20 L autoclave reactor, and the temperature inside the reactor was raised to 70 °C. To the reactor, the catalyst composition prepared in Example 1 was added, and then polymerization was performed, and when the polymerization conversion rate reached 98% or higher, an n-hexane solution containing 1.0 g of a polymerization stop agent and a solution in which an antioxidant Irganox 1520 (BASF Co., Ltd.) was dissolved at 30 wt% in n-hexane were added to terminate the reaction, and a solution in which t-butylcatechol (TBC) was dissolved at 0.5 wt% in n-hexane was added such that the content of the t-butylcatechol (TBC) was to be 1 ppm with respect to the content of 1,3-butadiene added to the reactor. A polymer obtained thereby was put into hot water heated with steam and stirred to remove a solvent, and then roll-dried to remove a residual solvent and water to prepare a butadien polymer composition.

### Example 2

A butadiene polymer composition was prepared in the same manner as in Example 1 except that, in Example 1, a solution in which t-butylcatechol was dissolved at 0.5 wt% in n-hexane was added such that the content of the t-butylcatechol (TBC) was to be 5 ppm, instead of 1 ppm, with respect to the content of 1,3-butadiene added to the reactor.

### Example 3

A butadiene polymer composition was prepared in the same manner as in Example 1 except that, in Example 1, a solution in which t-butylcatechol was dissolved at 0.5 wt% in n-hexane was added such that the content of the t-butylcatechol (TBC) was to be 15 ppm, instead of 1 ppm, with respect to the content of 1,3-butadiene added to the reactor.

### Example 4

A butadiene polymer composition was prepared in the same manner as in Example 1 except that, in Example 1, a solution in which t-butylcatechol was dissolved at 0.5 wt% in n-hexane was added such that the content of the t-butylcatechol (TBC) was to be 20 ppm, instead of 1 ppm, with respect to the content of 1,3-butadiene added to the reactor.

### Example 5

A butadiene polymer composition was prepared in the same manner as in Example 1 except that, in Example 1, a solution in which t-butylcatechol was dissolved at 0.5 wt% in n-hexane was added such that the content of the t-butylcatechol (TBC) was to be 40 ppm, instead of 1 ppm, with respect to the content of 1,3-butadiene added to the reactor.

### Example 6

500 g of 1,3-butadiene and 4.2 kg of n-hexane were added to a 20 L autoclave reactor, and the temperature inside the reactor was raised to 70 °C. To the reactor, the catalyst composition prepared in Example 1 was added, and then polymerization was performed, and when the polymerization conversion rate reached 98% or higher, an n-hexane solution containing 1.0 g of a polymerization stop agent and a solution in which an antioxidant Irganox 1520 (BASF Co., Ltd.) was dissolved at 30 wt% in n-hexane were added to terminate the reaction, and a solution in which butyrated hydroxytoluene (BHT) was dissolved at 10 wt% in n-hexane was added such that the content of the butyrated hydroxytoluene (BHT) was to be 10 ppm with respect to the content of 1,3-butadiene added to the reactor. A polymer obtained thereby was put into hot water heated with steam and stirred to remove a solvent, and then roll-dried to remove a residual solvent and water to prepare a butadien polymer composition.

### Example 7

500 g of 1,3-butadiene and 4.2 kg of n-hexane were added to a 20 L autoclave reactor, and the temperature inside the reactor was raised to 70 °C. To the reactor, a solution in which t-butylcatechol (TBC) was dissolved at 0.5 wt% in n-hexane was added such that the content of the t-butylcatechol (TBC) was to be 10 ppm with respect to the content of 1,3-butadiene added to the reactor. Thereafter, the catalyst composition prepared in Preparation Example 1 was added, and then polymerization was performed, and when the polymerization conversion rate reached 98% or higher, an n-hexane solution containing 1.0 g of a polymerization stop agent and a solution in which an antioxidant Irganox 1520 (BASF Co., Ltd.) was dissolved at 30 wt% in n-hexane were added to terminate the reaction. A polymer obtained thereby was put into hot water heated with steam and stirred to remove a solvent, and then roll-dried to remove a residual solvent and water to prepare a butadien polymer composition.

### Example 8

A butadiene polymer composition was prepared in the same manner as in Example 1 except that, in Example 7, a solution in which t-butylcatechol was dissolved at 0.5 wt% in n-hexane was added such that the content of the t-butylcatechol (TBC) was to be 20 ppm, instead of 10 ppm, with respect to the content of 1,3-butadiene added to the reactor.

### Comparative Example 1

500 g of 1,3-butadiene and 4.2 kg of n-hexane were added to a 20 L autoclave reactor, and the temperature inside the reactor was raised to 70 °C. To the reactor, the catalyst composition prepared in Preparation Example 1 was added, and then polymerization was performed, and when the polymerization conversion rate reached 98% or higher, an n-hexane solution containing 1.0 g of a polymerization stop agent and a solution in which an antioxidant Irganox 1520 (BASF Co., Ltd.) was dissolved at 30 wt% in n-hexane were added to terminate the reaction. A polymer obtained thereby was put into hot water heated with steam and stirred to remove a solvent, and then roll-dried to remove a residual solvent and water to prepare a butadien polymer composition.

### Experimental Example 1: Evaluation of physical properties of polymer composition

For the butadiene polymer compositions prepared in Examples 1 to 6 and Comparative Example 1, the Mooney viscosity and cis-1,4 bond content were measured in the following manner and are shown in Table 1 below.
* Mooney viscosity (ML1+4, @100 °C): For each polymer, the Mooney viscosity was measured at 100 °C using a large rotor with a Monsanto MV2000E under the condition of a rotor speed of 2±0.02 rpm. Samples used at this time were left to stand at room temperature (23±3 °C) for 30 minutes or more, and 27±3 g of each thereof was collected to fill the inside of a die cavity, and a platen was operated to measure the Mooney viscosity while applying torque.
* Cis-1,4-bond content: The cis-1,4 bond content of a conjugated diene portion was measured by Fourier transform infrared spectroscopy (FT-IR). Specifically, the FT-IR transmittance spectrum of a carbon disulfide solution of a conjugated diene-based polymer prepared at a concentration of 5 mg/mL with carbon disulfide of the same cell as a blank was measured, and then a maximum peak value (a, baseline) around 1130 cm⁻¹ of the measured spectrum, a minimum peak value (b) around 967 cm⁻¹ representing a trans-1,4 bond, a minimum peak value (c) around 911 cm⁻¹ representing a vinyl bond, and a minimum peak value (d) around 736 cm⁻¹ representing a cis-1,4 bond were used to obtain each content.

**[Table 1]**

| Class ifica tions | Examples | | | | | | | | Comp arat ive Exam ples |
|---|---|---|---|---|---|---|---|---|---|
| | 1 | 2 | 3 | 4 | 5 | 6 | 7 | 8 | 1 |
| Moone y visco sity (MU) | 44.7 | 45.4 | 46.5 | 42.7 | 49.4 | 48.4 | 42.5 | 49.1 | 48.5 |
| Cis-1,4-bond conte nt (wt%) | 96.4 | 96.5 | 96.5 | 96.3 | 96.8 | 96.5 | 96.8 | 97.0 | 96.5 |

As shown in Table 1 above, even when a compound containing a t-butylphenol group was mixed in the polymer composition during or after the preparation of a polymer in Examples 1 to 8, compared to Comparative Example 1 in which the compound containing a t-butylphenol group was not mixed with the butadiene polymer, the cis-1,4 bond content of the butadiene polymer was not affected, and the Mooney viscosity was not significantly affected, so that it was confirmed that the Mooney viscosity was maintained at the same level.

### Experimental Example 2: Measurement of Y/I (yellow index)

20 g of the polymer composition prepared in each of Examples 1 to 8 and Comparative Example 1 was thinly spread through a roll mill having an interval of 2.0 mm, and then 5 g of the composition was cut into a square shape, put into a specimen mold, and compressed at a temperature of 140 °C to prepare a specimen having a thickness of 5 mm. Thereafter, the Y/I of the prepared specimen was measured using a colorimeter (Ultrascan Pro, Hunterlab Co., Ltd.) and shown in Table 2 below.

### Experimental Example 3: Measurement of antioxidant content

The polymer composition prepared in each of Examples 1 to 8 and Comparative Example 1 was completely dissolved in chloroform, and then methanol was added thereto to precipitate a polymer component. Thereafter, the filtrate was filtered to prepare a sample. An antioxidant standard sample was injected into an HPLC/UV instrument to prepare a calibration curve, and then the prepared sample was injected, and using the calibration curve, the antioxidant content in the polymer composition was calculated and shown in Table 2 below.

**[Table 2]**

| Classifications | Yellow index | | | Antioxidant content (ppm) | |
|---|---|---|---|---|---|
| | 2 weeks elapsed | 4 weeks elapsed | 6 weeks elapsed | 2 weeks elapsed | 6 weeks elapsed |
| Example 1 | 19.2 | 22.4 | 25.7 | 3028 | 2504 |
| Example 2 | 18.5 | 20.9 | 25.8 | 3058 | 2805 |
| Example 3 | 18.1 | 14.8 | 16.8 | 3005 | 2994 |
| Example 4 | 15.2 | 15.1 | 12.1 | 2983 | 2854 |
| Example 5 | 14.2 | 11.4 | 11.0 | 3054 | 2985 |
| Example 6 | 17.4 | 19.8 | 20.1 | 3057 | 2894 |
| Example 7 | 15.1 | 15.9 | 16.4 | 3091 | 2892 |
| Example 8 | 15.6 | 15.4 | 14.9 | 3034 | 2877 |
| Comparative Example 1 | 16.8 | 23.5 | 31.8 | 3055 | 2104 |

As shown in Table 2 above, the Y/I of the polymer composition prepared in each of Examples 1 to 8 was not sharply increased compared to that of the polymer composition prepared in Comparative Example 1 even after 6 weeks, and was maintained at an appropriate level, and it was also confirmed that the antioxidant was also retained at a high content.

In addition, as can be confirmed in Examples 2 to 4 in which the compound containing a t-butylphenol group was mixed after the termination of the polymerization, and in Examples 7 and 8 in which the compound containing a t-butylphenol group was mixed before the initiation of the polymerization, it was confirmed that the yellowing phenomenon was prevented regardless of when the compound containing a t-butylphenol group was added.

From the results, it has been confirmed that the polymer composition prepared according to the polymer composition preparation method of the present invention contains a branched conjugated diene-based polymer, thereby having excellent processability, and preventing the yellowing phenomenon.

## Claims

1. A method for preparing a polymer composition, the method comprising:
preparing a branched conjugated diene-based polymer by polymerizing a conjugated diene-based monomer in the presence of a catalyst composition containing an organometallic compound, an organoaluminum compound, a fluorine-based compound, and a diphenylamine-based compound (S10); and
mixing the monomer before the polymerization in Step (S10), a polymerization solution during the polymerization, or the branched conjugated diene-based polymer after the polymerization with a compound containing a t-butylphenol group (S20).

2. The method of claim 1, wherein the organometallic compound is an organonickel compound.

3. The method of claim 1, wherein the organometallic compound is one or more selected from the group consisting of nickel benzoate, nickel acetate, nickel naphthenate, nickel octanoate, nickel neodecanoate, bis(α-furyl dioxime) nickel, nickel palmitate, nickel stearate, nickel acetylacetonate , nickel salicaldade, bis(cyclopentadiene) nickel, bis(salicylaldehyde) ethylene diimine nickel, cyclopentadienyl-nickel nitrosyl, bis(π-allylnickel), bis(π-cycloocta-1,5-diene) nickel, bis(π-allylnickel trifluoroacetate) and nickel tetracarbonyl.

4. The method of claim 1, wherein the organoaluminum compound is an alkyl aluminum compound represented by Formula 1 below:
[Formula 1] AlR¹R²R³
wherein in Formula 1 above,
R¹ to R³ are each independently hydrogen or an alkyl group having 1 to 12 carbon atoms, wherein R¹ to R³ are not all hydrogen.

5. The method of claim 1, wherein the fluorine-based compound is one or more selected from the group consisting of hydrogen fluoride and boron trifluoride.

6. The method of claim 1, wherein the diphenylamine-based compound is a compound represented by Formula 2 below: 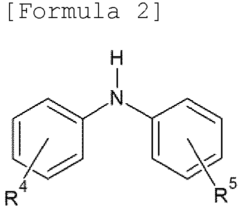
wherein in Formula 2 above,
R⁴ and R⁵ are each independently an alkyl group having 2 to 18 carbon atoms substituted or unsubstituted with an aryl group having 6 to 30 carbon atoms.

7. The method of claim 1, wherein the compound containing a t-butylphenol group is t-butylcatechol, butylated hydroxytoluene, or a mixture thereof.

8. The method of claim 1, wherein in Step (S20), the compound containing a t-butylphenol group is mixed in a content of 0.0001 parts by weight to 0.005 parts by weight based on 100 parts by weight of the conjugated diene-based monomer or the branched conjugated diene-based polymer.

9. A polymer composition comprising a metal-catalyzed branched conjugated diene-based polymer and a compound containing a t-butylphenol group.

10. The polymer composition of claim 9, wherein the content of the compound containing a t-butylphenol group is 0.0001 parts by weight to 0.005 parts by weight based on 100 parts by weight of the metal-catalyzed branched conjugated diene-based polymer.
